(19) Europäisches Patentamt

European Patent Office

Office européen des brevets

(11) **EP 1 686 680 A2**

(12) **EUROPEAN PATENT APPLICATION**

(43) Date of publication:
**02.08.2006 Bulletin 2006/31**

(51) Int Cl.:
*H02M 7/04* (2006.01)          *H02M 1/00* (2006.01)

(21) Application number: **06075160.9**

(22) Date of filing: **24.01.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **28.01.2005 FI 20050094**

(71) Applicant: **Vacon Oyj**
**65380 Vaasa (FI)**

(72) Inventor: **Merilinna, Paavo**
**65320 Vaasa (FI)**

(74) Representative: **Järveläinen, Pertti Tauno Juhani et al**
**Heinänen Oy**
**Annankatu 31-33 C**
**00100 Helsinki (FI)**

(54) **Power source**

(57)    A flyback power source, comprising a transformer (T1) provided with a primary winding (N1) and at least one secondary winding (N2), a semiconductor switch (V1) in the primary circuit for connecting a supply voltage (u1) to the primary winding, said secondary circuit being provided with a filter capacitor arrangement, a diode circuit and a semiconductor switch arrangement for controlling the secondary circuit, in which power source the energy is transferred from the primary into the secondary by storing it temporarily in the magnetic circuit of the transformer. The secondary circuit of the power source contains at least one power switch (V2) and a diode selector consisting of at least two diodes (D1, D2), wherein the secondary-voltage filter capacitor into which the transformer discharges energy from its magnetic circuit is selectable by means of the diode selector and power switches, so that it is possible to produce two or more output voltages ($+U_{C1}$, $+U_{C2}$) from the same secondary winding. The transformer may also have two secondary windings, in which case the voltages produced by the arrangement may be placed at different potentials and their magnitudes are not dependent on each other except through the numbers of turns in the secondary windings.

Fig. 5

EP 1 686 680 A2

**Description**

The present invention relates to a power source. In particular, the invention concerns a power source implemented on the so-called flyback principle.

Flyback power sources are generally used to generate auxiliary voltages, e.g. +24V and +5V direct voltages, needed by the control system of an electronic device, e.g. a frequency converter, in cases where the total power required by the control system is small, e.g. below 100 W. The auxiliary voltages generated can also be used in the control of a DC fan intended for the cooling of the device.

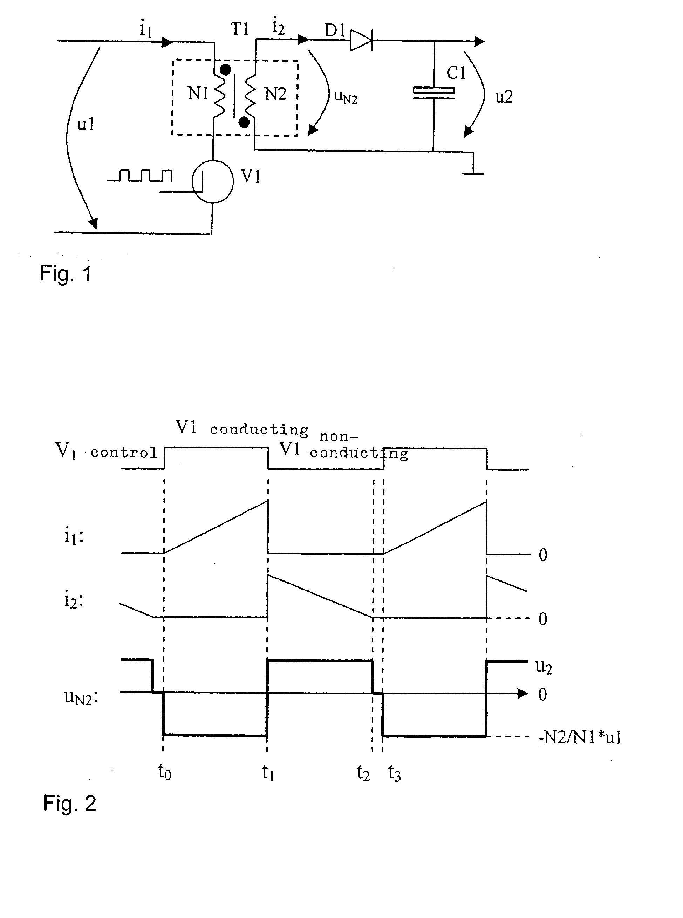

In a flyback power source, energy is transferred from a primary side to a secondary side by storing it temporarily in a magnetic circuit. Fig. 1 presents a typical circuit diagram of a flyback power source for producing an output voltage u2 from an input voltage u1, and Fig. 2 presents a diagram illustrating its operation. Connected to the input terminals of the power source is an input voltage u1 (direct voltage), the current i1 of which flows through the primary winding N1 of a transformer T1 and a semiconductor switch V1. Connected in series with the secondary winding N2 of the transformer is a diode D1 for rectifying the voltage $u_{N2}$ of the secondary winding to produce the output voltage u2. As the current i2 in the secondary winding is a pulsating current, a filtering capacitor C1 is connected to the output terminals to smooth the output voltage. The polarity of the primary and secondary windings of the transformer is indicated by dots in Fig. 1. As depicted in Fig. 2, the operation of the power source is as follows:

● At instant $t_0$, the switch V1 is turned into conduction

● During period $t_0$... $t_1$, the current $i_1$ increases linearly at a rate determined by the input voltage $u_1$ and the magnetic circuit of the transformer T1. The secondary voltage of the transformer is negative and its magnitude is determined by the numbers of turns in the windings and by the input voltage:

$$u_{N2} = (-N2/N1)^* \ u_1.$$

The diode D1 prevents the secondary-voltage filter capacitor C1 from being discharged towards the transformer. During this period, energy is stored in the magnetic circuit of the transformer.

● At instant $t_1$, V1 is turned off, whereupon the energy stored in the magnetic circuit of the transformer begins discharging via the secondary winding to the output voltage $u_2$.

● During period $t_1$... $t_2$, the energy of the magnetic circuit of the transformer is discharged and the secondary current i2 falls linearly towards zero. The filter capacitor filtering the secondary voltage is generally so large that its voltage u2 is not changed significantly during a single operating cycle, so the transformer secondary voltage $u_{N2}$ also remains almost constant during the whole period.

● At instant $t_2$, the secondary current has fallen to zero, which means that the energy of the magnetic circuit of the transformer has now been entirely transferred into the secondary circuit.

● At instant $t_3$, a new operating cycle begins.

A flyback power source generally contains a number of secondary windings corresponding to the number of output voltages to be generated, because the levels of the output voltages are determined by the numbers of turns in the secondary windings. In the case of a plurality of secondary windings, the energy (period $t_1...t_2$) of the magnetic circuit is primarily discharged into that secondary circuit which has the lowest voltage in relation to the number of turns in the winding feeding it (in other words, into that secondary winding which has the largest load and therefore the relatively lowest filter capacitor voltage).

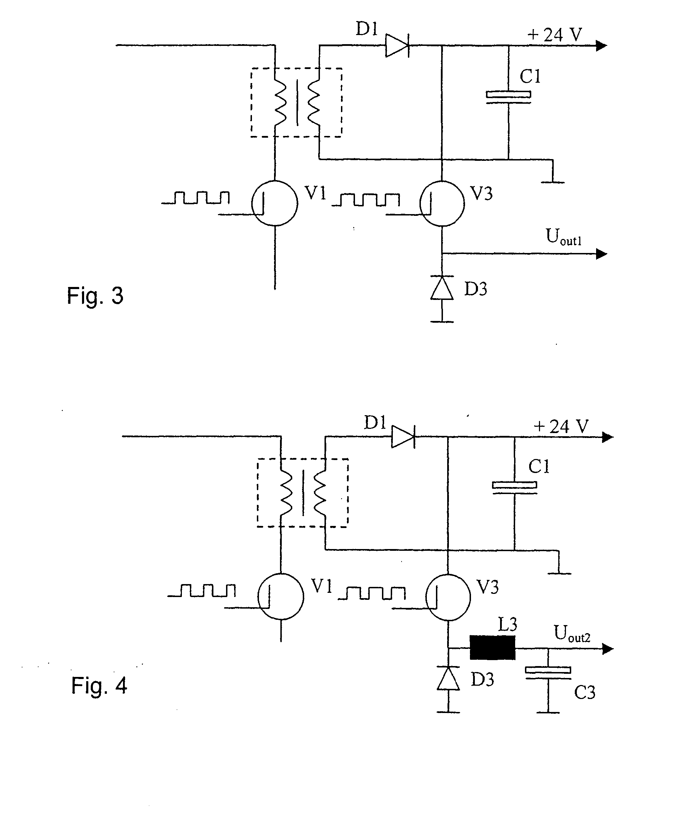

One of the output voltages may feed a DC fan cooling the device. If the rotational speed of the fan need not be regulated, it can be fed directly by a voltage generated by the power source. As is known, a controllable direct voltage for regulating the rotational speed of the fan can be produced e.g. in the manner illustrated by Fig. 3 and 4:

Fig. 3 illustrates the chopping of the input voltage where an output voltage, e.g. +24V, produced by the power source is connected to a fan on the on-off principle without filtering. For this purpose, a semiconductor switch V3 and a diode D3 are connected to the output voltage. The feed voltage $U_{out1}$ for the fan is obtained from the juncture between the switch V3 and the diode D3; when V3 is conducting, $U_{out1}$ is +24V, and when V3 is not conducting, $U_{out1}$ is 0 (diode D3 is included in the circuit to prevent the flow of a possible inductive current of the fan circuit when V3 is non-conducting). This is a simple solution which, however, is not tolerated by all DC fans due to the high harmonics content of the output voltage.

Fig. 4 presents a voltage step-down chopper, wherein a variable voltage is produced from a higher original voltage by a so-called step-down chopper and the voltage thus obtained is filtered by an LC-type filter containing an inductor L3 and a capacitor C3 to produce an output voltage $U_{out2}$.

The object of the present invention is to create a new type of flyback power source that will simplify the transformer so that a smaller number of secondary windings are required than in prior-art solutions. When implemented according to the invention, the same secondary winding can be used to produce several constant or adjustable secondary voltages. The invention can be applied in the control of a DC fan designed for the cooling of e.g. a frequency converter or some other power electronics device, in which control method the rotational speed of the fan is varied according to the cooling need by generating a variable direct voltage, to which the fan is connected.

The features of the power source of the invention are presented in detail in the claims below.

As compared to prior-art solutions, the invention allows the following advantages to be achieved, among others:

- the structure of the transformer of the power source is simplified due to a smaller number of secondary windings,
- a variable direct voltage is produced by means of fewer components and thus also at a lower cost than in prior-art solutions,
- the feed voltage for a DC fan produced by the method contains no significant harmonics, which has a favorable effect on the strain and service life of the fan (in particular as compared to a solution where the fan feed voltage is only chopped without filtering of the output voltage), and
- the switching frequencies of the circuits producing the secondary voltages may vary over a wide range.

In the following, the invention will be described in detail with reference to an example and the attached drawings, wherein

 Fig. 1 presents a typical circuit diagram of a flyback power source,
 Fig. 2 is a diagram illustrating the operation of the flyback power source in Fig. 1,
 Fig. 3 presents a prior-art solution for controlling the speed of a DC fan,
 Fig. 4 presents a second prior-art solution for controlling the speed of a DC fan,
 Fig. 5 presents a flyback power source according to the present invention,
 Fig. 6 is a diagram illustrating the operation of the flyback power source in Fig. 5,
 Fig. 7 presents a flyback power source according to the invention provided with two secondary windings, and
 Fig. 8 presents a second flyback power source according to the invention provided with one secondary winding and used for producing a feed voltage for a DC fan.

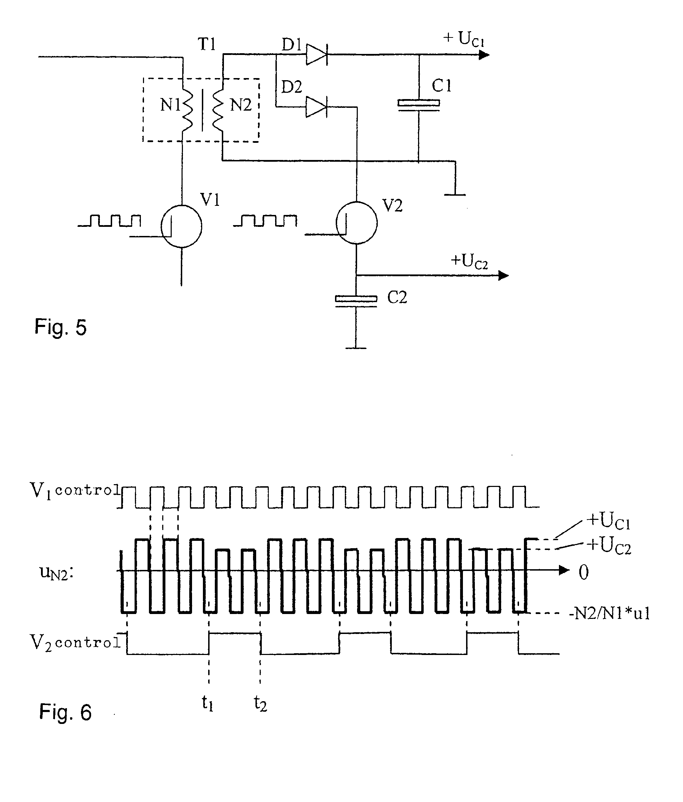

As appeared from the description of the operation of the flyback power source according to Fig. 1, during the energy discharge period the voltage of the transformer secondary winding is determined by the voltage of the capacitor into which the energy is discharged. According to the present invention, several voltages of different magnitudes, e.g. voltages $+U_{C1}$, $+U_{C2}$ as presented in Fig. 5, can be obtained from the same secondary winding by using diode selectors and power switches.

Fig. 5 presents an example of a case of two secondary voltages $+U_{C1}$, $+U_{C2}$, and Fig. 6 presents a diagram of the operation of the circuit. In the circuit of Fig. 5, the components corresponding to Fig. 1 are denoted with the same designations and, as regards the primary and the transformer, the operation of the power source corresponds to the operation of the circuit of Fig. 1. A second diode D2 added to the secondary circuit of the transformer is connected in parallel with diode D1 to form a diode selector circuit.

In Fig. 5, the voltage across capacitor C2 is lower than the voltage across capacitor C1 and both capacitors are connected to the same ground potential. Thanks to the diode selector D1-D2, the transformer secondary winding is discharged to the lowest secondary voltage. Thus, when switch V2 is conducting, the transformer secondary winding discharges energy into capacitor C2 (period $t_1...t_2$ in Fig. 6). When switch V2 is not conducting, the energy of the transformer is discharged into capacitor C1. The first output voltage $+U_{C1}$ is obtained from the terminals of capacitor C1 and the second output voltage $+U_{C2}$ from the terminals of capacitor C2.

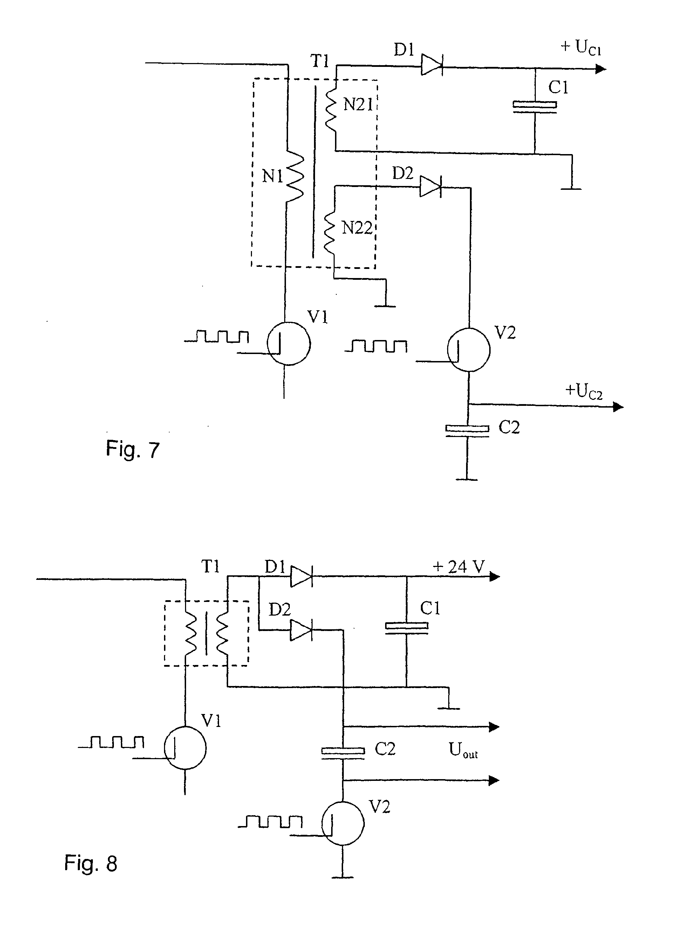

Fig. 7 presents a circuit corresponding to the flyback power source of Fig. 5 in a case where the transformer has two secondary windings (N21, N22). The voltages produced by this arrangement may be placed at different potentials and their magnitudes are not dependent on each other except through the numbers of turns in the secondary windings. In this case, too, when switch V2 is conducting, the energy of the transformer is discharged into capacitor C2, whose voltage in relation to the number of turns in secondary winding N22 is lower than the voltage of capacitor C1 in relation to the number of turns in secondary winding N21. When V2 is not conducting, the energy of the transformer is discharged into capacitor C1.

The operation of the invention imposes no limitations on the pulse frequency of switch V2, but it is advantageous to have it designed lower than the pulse frequency of the primary-side power switch V1. The pulse frequency of V2 may vary within wide limits, and its pulse ratio (ON/OFF) can be used to adjust the magnitude of the voltage across capacitor C2. As compared e.g. to the prior-art solution illustrated in Fig. 4, in the solution of the invention the inductor L2 can be left out altogether and the output voltage is still well filtered.

The invention can also be applied to produce a feed voltage for a DC fan according to the example in Fig. 8, by connecting switch V2 and capacitor C2 in a different order than in Fig. 5. This provides the advantage of an easier arrangement for controlling switch V2. The feed voltage $U_{out}$ for the fan is formed at the terminals of capacitor C2 and it is floating relative to the ground potential. The pulse ratio of switch V2 determines the voltage across C2 and therefore also the speed of rotation of the fan.

It is obvious to the person skilled in the art that different embodiments of the invention are not exclusively limited to the example described above, but that they may be varied within the scope of the claims presented below.

## Claims

1. A flyback power source, comprising a transformer (T1) provided with a primary winding (N1) and at least one secondary winding (N2), a semiconductor switch (V1) in the primary circuit for connecting a supply voltage (u1) to the primary winding, said secondary circuit being provided with a filter capacitor arrangement, a diode circuit and a semiconductor switch arrangement for controlling the secondary circuit,
   in which power source the energy is transferred from the primary into the secondary by storing it temporarily in the magnetic circuit of the transformer,
   **characterized in that**
   the secondary circuit of the power source contains at least one power switch (V2) and a diode selector consisting of at least two diodes (D1, D2), wherein the secondary-voltage filter capacitor into which the transformer discharges energy from its magnetic circuit is selectable by means of the diode selector and power switches, so that it is possible to produce two or more output voltages ($+U_{C1}$, $+U_{C2}$) from the same secondary winding.

2. A flyback power source, comprising a transformer (T1) provided with a primary winding (N1) and at least two secondary windings (N21, N22), a semiconductor switch (V1) in the primary circuit for connecting a supply voltage (u1) to the primary winding, and said secondary circuits being provided with a filter capacitor arrangement, a diode circuit and a semiconductor switch arrangement for controlling the secondary circuits,
   in which power source the energy is transferred from the primary into the secondary by storing it temporarily in the magnetic circuit of the transformer,
   **characterized in that**
   at least one of the secondary circuits of the power source comprises a circuit consisting of at least one diode (D1) and at least one power switch (V2), which allow the selection of the secondary-voltage filter capacitor into which the transformer discharges energy from its magnetic circuit.

3. A flyback power source according to claim 1 or 2, **characterized in that** the pulse frequency of the power switches in the secondary circuit is adjustable.

4. A flyback power source according to any one of claims 1 - 3, **characterized in that** the pulse frequency of the secondary circuit can be adjusted to form a desired variable voltage across a capacitor in the secondary circuit.

5. A flyback power source according to any one of claims 1 - 4, **characterized in that** at least one output voltage thus produced is used to feed a DC fan cooling a frequency converter or some other power electronics device.

Fig. 1

Fig. 2

Fig. 3

Fig. 4

Fig. 5

Fig. 6

$u_{N2}$:

$V_1 \text{control}$

$V_2 \text{control}$

$+U_{C1}$

$+U_{C2}$

$0$

$-N2/N1*u1$

$t_1$ $t_2$

Fig. 7

Fig. 8